# EUROPÄISCHE PATENTANMELDUNG

(11) **EP 1 291 701 A1**
(43) Veröffentlichungstag der Anmeldung: **12.03.2003**
(21) Anmeldenummer: 02020129.9
(22) Anmeldetag: 09.09.2002
(51) Int. Cl.: G02B 27/01

(54) **Head Up Display mit mindestens zwei Spiegeln**

(30) Priorität: 10.09.2001 DE 10144489
(71) Anmelder: SIEMENS AKTIENGESELLSCHAFT, 80333 München (DE)
(72) Erfinder: Mayer, Ralf, Dr., 67295 Bolanden (DE); Schmidt, Franz-Peter, 61350 Bad Homburg (DE)

(57) **Zusammenfassung**

Bei einem Head Up Display, bei dem ein in einer Bilderzeugungseinrichtung (1, 2, 3) erzeugtes Bild über einen ersten Spiegel (4) und einen asphärischen Spiegel (6) auf eine Scheibe (WS) eines Kraftfahrzeugs projizierbar ist, wobei so durch Strahlen (8, 9) ein Strahlengang vorgegeben wird, wobei der asphärische Spiegel (6) im Strahlengang am nächsten zu der Scheibe (WS) angeordnet ist, ist vorgesehen, dass der asphärische Spiegel (6) eine feste Position einnimmt, dass der erste Spiegel (4) mittels einer Verstelleinrichtung (5) um eine Achse (12) drehbar gelagert ist, dass durch das Drehen des ersten Spiegels (4) um die Achse (12) die Lage des auf die Scheibe (WS) projizierten Bildes (10, 11) veränderbar ist.

## Beschreibung

Die Erfindung betrifft den Head Up Display mit mindestens zwei Spiegeln. Aus dem Stand der Technik ist es bekannt, ein in einer Bilderzeugungseinrichtung erzeugtes Bild über Spiegel auf eine Projektionsfläche, beispielsweise die Windschutzscheibe eines Kraftfahrzeugs zu projizieren. So können dem Fahrer eines Kraftfahrzeugs Informationen visualisiert dargestellt werden, ohne ihn vom Verkehrsgeschehen vor seinem Kraftfahrzeug abzulenken. Wegen des im Kraftfahrzeug nur knapp vorhandenen Bauraums werden Spiegel zur Umlenkung des Strahlenganges verwendet. Aus dem Stand der Technik ist es bekannt, zum Ausgleich von Verzerrungen durch gewölbte Windschutzscheiben den Spiegel, der sich im Strahlengang am nächsten zu der Projektionsfläche befindet, asphärisch auszubilden. So können auch bei heute üblichen gewölbten Windschutzscheiben möglichst unverzerrte Bilder auf einer Windschutzscheibe dargestellt werden. Soll die Lage des projizierten Bildes verändert werden können, um beispielsweise die Körpergröße unterschiedlicher Fahrer auszugleichen, oder um den Projektionsort je nach Umweltbedingungen und/oder Betriebsbedingungen des Kraftfahrzeugs (Tag- Nachtbetrieb, langsamer Stop- und Go-Verkehr - schnelle Autobahnfahrt) zu verändern, wird im Stand der Technik der asphärische Spiegel um eine Achse gedreht, um die Lage des projizierten Bildes zu verändern. Nachteilig hierbei ist es, dass zur Verstellung des asphärischen Spiegels eine aufwendige Mechanik erforderlich ist, damit der asphärische Spiegel auch während der Fahrt keinen Vibrationen unterworfen wird und so das Bild nicht verwackelt wird.

Aufgabe der Erfindung ist es daher, ein Head Up Display anzubieten, bei dem ein asphärischer Spiegel Verzerrungen ausgleicht und bei dem die Lage des Bildes auf die Projektionsfläche verstellbar ist. Diese Aufgabe wird dadurch gelöst, dass der asphärische Spiegel fest eingebaut ist und eine Verstellung des Projektionsortes des Bildes durch eine Drehung des ersten Spiegels erfolgt. Hierdurch kann der asphärische Spiegel besser und einfacher lagestabil befestigt werden. Weiterhin können die Bereiche der Windschutzscheibe, in die das Bild projiziert werden soll, von dem asphärischen Spiegel kompensiert werden, da sich seine Lage zu der Windschutzscheibe nicht ändert. Schließlich ist der erste Spiegel meist kleiner als der asphärische Spiegel, so dass die Verstelleinrichtung weniger Masse bewegen muß und somit ebenfalls einfacher und preiswerter ausgestaltet sein kann.

Wenn der erste Spiegel eine plane Oberfläche aufweist, ist er besonders einfach zu gestalten und herzustellen. Weiterhin kann dann die Verstelleinrichtung besonders einfach aufgebaut sein.

Dadurch, dass der asphärische Spiegel fest in einem Gehäuse eingebaut ist und das Gehäuse auch den ersten Spiegel mit der Verstelleinrichtung und die Bilderzeugungseinheit trägt, ist eine optimale Lage der vorgenannten Bauteile des Head Up Displays zueinander einfach, sicher und dauerhaft zu realisieren.

Die Erfindung wird nachfolgend anhand der Figuren für ein besonders bevorzugtes Ausführungsbeispiel näher erläutert.

Es zeigen:
- Fig. 1:: ein besonders bevorzugtes Ausführungsbeispiel im Schnitt in einem Kraftfahrzeug eingebaut,
- Fig. 2:: den Teilschnitt B aus Fig. 1

Eine Bilderzeugungseinrichtung 1 weist ein Flüssigkristall-Display 2 und eine Lichtquelle 3 auf. Ein erster Spiegel 4 ist mit einer Verstelleinrichtung 5 verbunden. Ein asphärischer Spiegel 6 ist fest mit einem Gehäuse 7 verbunden, in dem auch die Bilderzeugungseinrichtung 1 und die Verstelleinrichtung 5 befestigt sind. Oberhalb des Gehäuses 7 erkennt man eine Scheibe (WS) in Form einer Windschutzscheibe eines sonst nicht weiter dargestellten Kraftfahrzeugs. Strahlen 8,9 eines in der Bilderzeugungseinrichtung 1 erzeugten Bildes werden von dem ersten Spiegel 4 auf den asphärischen Spiegel 6 reflektiert, der wiederum die Strahlen 8, 9 auf die Windschutzscheibe WS reflektiert.

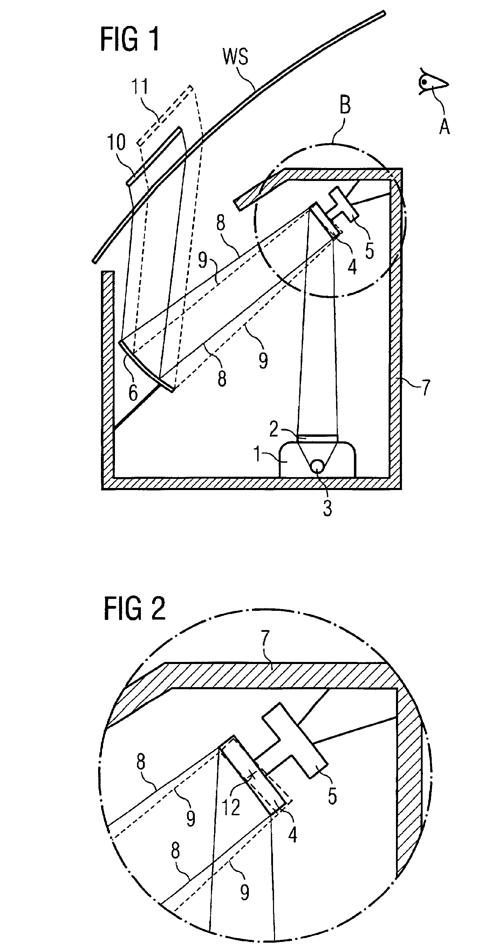

Der Strahlengang der Strahlen 8 ist mit einer durchgezogenen Linie dargestellt, während der Strahlengang der Strahlen 9 mit unterbrochenen Linien dargestellt ist. Wenn der Spiegel 4 in einer Position ist, die der Darstellung des Spiegels 5 mit durchgezogenen Linien entspricht (vergleiche Fig. 2), reflektiert der Spiegel die Strahlen so, wie sie durch die Strahlen 8 dargestellt sind. So wird das Bild über den asphärischen Spiegel so reflektiert, dass ein Betrachter mit seinem Auge A eine untere Bilddarstellung 10 wahrnehmen kann. Wird der erste Spiegel 4 in eine Position gebracht, die der gestrichelten Position entspricht (vergleiche Fig. 2), reflektiert er die unterbrochen dargestellten Strahlen 9, so dass über den asphärischen Spiegel 6 die Strahlen 9 so reflektiert werden, dass der Betrachter mit seinem Auge A ein Bild 11 wahrnehmen kann, das oberhalb des Bildes 10 erscheint.

Es ist auch möglich, Zwischenpositionen darzustellen. Auch ist es möglich, den Bereich, in dem die Bilder 10, 11 wahrnehmbar sein sollen, durch eine größere Verstellbarkeit des ersten Spiegels 4 zu vergrößern. Es ist natürlich auch möglich, die Verstelleinrichtung 5 so auszugestalten, dass der Spiegel 4 um mehrere Achsen verstellbar ist, so dass die Lage der Bilder 10, 11 auch seitlich variiert werden kann.

In Fig. 2 erkennt man weiterhin, dass im dargestellten Ausführungsbeispiel der Spiegel 4 um eine Achse 12 drehbar ist, wobei die Achse 12 sich innerhalb des Querschnitts des Spiegels 4 befindet. Es ist auch möglich, die Drehachse des Spiegels 4 oder bei mehreren Drehachsen eine oder mehrere Drehachsen außerhalb des Querschnitts des Spiegels 4 anzuordnen.

## Patentansprüche

1. Head Up Display, bei dem ein in einer Bilderzeugungseinrichtung (1, 2, 3) erzeugtes Bild über einen ersten Spiegel (4) und einen asphärischen Spiegel (6) auf eine Scheibe (WS) eines Kraftfahrzeugs projizierbar ist, wobei so durch Strahlen (8, 9) ein Strahlengang vorgegeben wird, wobei der asphärische Spiegel (6) im Strahlengang am nächsten zu der Scheibe (WS) angeordnet ist, **dadurch gekennzeichnet**
**dass** der asphärische Spiegel (6) eine feste Position einnimmt,
**dass** der erste Spiegel (4) mittels einer Verstelleinrichtung (5) um eine Achse (12) drehbar gelagert ist,
**dass** durch das Drehen des ersten Spiegels (4) um die Achse (12) die Lage des auf die Scheibe (WS) projizierten Bildes (10, 11) veränderbar ist.

2. Head Up Display nach Anspruch 1, **dadurch gekennzeichnet, dass** der asphärische Spiegel (6) fest in einem Gehäuse (7) eingebaut ist,
dass das Gehäuse (7) auch den ersten Spiegel (4) mit der Verstelleinrichtung (5) und die Bilderzeugungseinrichtung (1) trägt.

3. Head Up Display nach einem der bevorstehenden Ansprüche, **dadurch gekennzeichnet, dass** der erste Spiegel (4) eine plane Oberfläche aufweist.

4. Head Up Display nach einem der vorstehenden Ansprüche, **dadurch gekennzeichnet, dass** zwischen dem asphärischen Spiegel (6) und der Bilderzeugungseinrichtung (1) im Strahlengang der Strahlen (8, 9) weitere Spiegel montiert sind.

5. Head Up Display nach einem der vorstehenden Ansprüche, **dadurch gekennzeichnet, dass** die Bilderzeugungseinrichtung (1) aus einem hinterleuchteten Flüssigkristall-Display (2) besteht.

6. Head Up Display nach einem der Ansprüche 1 bis 4, **dadurch gekennzeichnet, dass** die Bilderzeugungseinrichtung aus einer Leuchtdiodenmatrix besteht.
